# EUROPEAN PATENT SPECIFICATION

(11) **EP 1 701 243 B1**
(45) Date of publication and mention of the grant of the patent: **20.08.2008**
(21) Application number: 05251371.0
(22) Date of filing: 08.03.2005
(51) Int. Cl.: G06F 3/033, G06F 3/023

(54) **Handheld electronic device having improved display and selection of disambiguation choices, and associated method**
Tragbares elektronisches Gerät mit Anzeige von Disambiguierungsauswahlmöglichkeiten und entsprechende Methode
Dispositif électronique portatif comportant un affichage avec plusieurs choix de désambiguation

(43) Date of publication of application: 13.09.2006
(73) Proprietor: Research In Motion Limited, Waterloo, Ontario N2L 3W8 (CA)
(72) Inventor: Pathiyal, Krishna K., Waterloo, Ontario N2V 2R6 (CA)
(74) Representative: Roberts, Gwilym Vaughan

(56) References cited:
- EP-A- 0 397 164
- US-A1- 2004 174 400
- US-B1- 6 204 848

## Description

### BACKGROUND OF THE INVENTION

### Field of the Invention

The invention relates generally to electronic devices employing a text disambiguation function, and, more particularly, to a handheld electronic device having an improved manner of displaying and enabling the selection of character combination choices generated by a text disambiguation function. The invention also relates to an improved method of displaying and enabling the selection of character combination choices generated by a text disambiguation function.

### Background Information

Numerous types of handheld electronic devices are known. Examples of such handheld electronic devices include, for instance, personal data assistants (PDAs), handheld computers, two-way pagers, cellular telephones, and the like. Many handheld electronic devices also feature wireless communication capability, although many such handheld electronic devices are stand-alone devices that are functional without communication with other devices.

Such handheld electronic devices are generally intended to be portable, and thus are of a relatively compact configuration in which keys and other input structures often perform multiple functions under certain circumstances or may otherwise have multiple aspects or features assigned thereto. With advances in technology, handheld electronic devices are built to have progressively smaller form factors yet have progressively greater numbers of applications and features resident thereon. As a practical matter, the keys of a keypad can only be reduced to a certain small size before the keys become relatively unusable. In order to enable text entry, however, a keypad must be capable of entering all twenty-six letters of the Roman alphabet, for instance, as well as appropriate punctuation and other symbols.

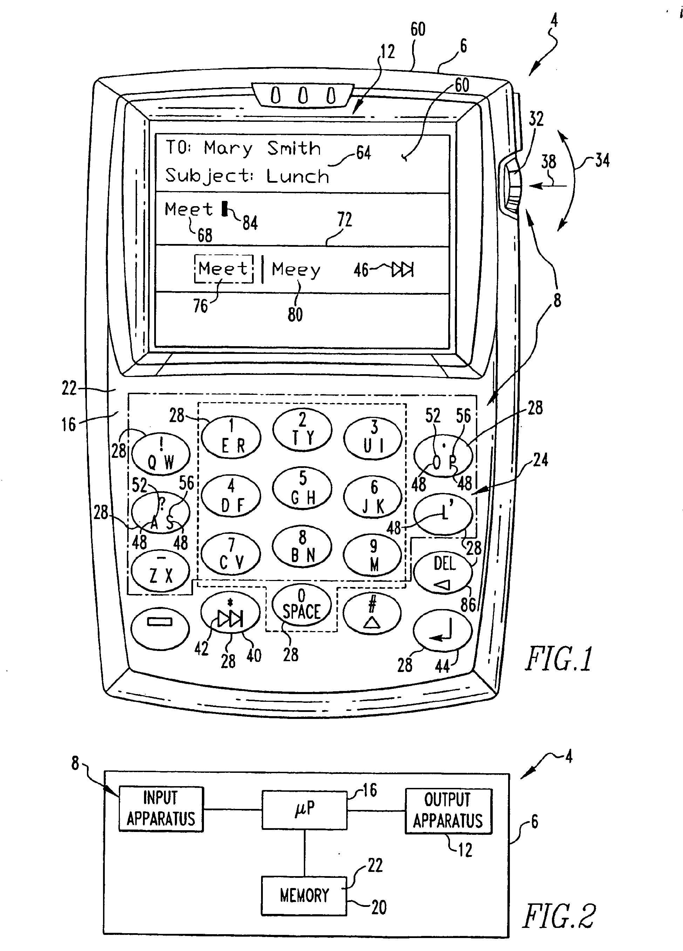

One way of providing numerous letters in a small space has been to provide a "reduced keyboard" in which multiple letters, symbols, and/or digits, and the like, are assigned to any given key. For example, a touch-tone telephone includes a reduced keyboard by providing twelve keys, of which ten have digits thereon, and of these ten keys, eight have Roman letters assigned thereto. For instance, one of the keys includes the digit "2" as well as the letters "A", "B", and "C". Since a single actuation of such a key potentially could be intended by the user to refer to any of the letters "A", "B", and "C", and potentially could also be intended to refer to the digit "2", the input (by actuation of the key) generally is an ambiguous input and is in need of some type of disambiguation in order to be useful for text entry purposes. Other known reduced keyboards have included other arrangements of keys, letters, symbols, digits, and the like. One example of a reduced keyboard is the keypad 24 forming a part of the handheld electronic device 4 shown in Figure 1 and described in greater detail herein. Keypad 24 is what is known as a reduced QWERTY keyboard.

In order to enable a user to make use of the multiple letters, digits, and the like on any given key in an ambiguous keyboard, numerous keystroke interpretation systems have been provided. For instance, a "multi-tap" system allows a user to substantially unambiguously specify a particular character on a key by pressing the same key a number of times equivalent to the position of the desired character on the key. For example, on the aforementioned telephone key that includes the letters "ABC", if the user desires to specify the letter "C", the user will press the key three times. Similarly, on the aforementioned keypad 24, if the user desires to specify the letter "C", the user will press the key that includes "CV7" once, and if the user desires to specify the letter "I", the user will press the key that includes "UI3" two times.

Another exemplary keystroke interpretation system would include key chording, of which various types exist. For instance, a particular character can be entered by pressing two keys in succession or by pressing and holding a first key while pressing a second key. Still another exemplary keystroke interpretation system would be a "press-and-hold / press-and-release" interpretation function in which a given key provides a first result if the key is pressed and immediately released, and provides a second result if the key is pressed and held for a short period of time.

Another keystroke interpretation system that has been employed is a software-based text disambiguation function. In such a system, a user typically presses keys to which one or more characters have been assigned, generally pressing each key one time for each desired letter, and the disambiguation software attempts to predict the intended input. Numerous such systems have been proposed. One example of such a system is disclosed in commonly owned United States Patent Appln. Publication 2006/0058995, entitled "Handheld Electronic Device With Text Disambiguation". As is known, many such systems display an output component as the user is typing (pressing keys) that includes a list of possible intended input character strings (i.e., what the user intended while typing) that are generated by the disambiguation software. For example, Figure 1 shows a display 60 that may be provided by the disambiguation software system described in the aforementioned commonly owned United States Patent Appln. Publication 2006/0058995. As described in greater detail herein, Figure 1 shows an exemplary output 64 being depicted on the display 60 that includes a text component 68 and a variant component 72. The variant component 72 includes a default portion 76 and a variant portion 80. The variant component 72 represents a list of possible intended inputs (in the form of a number of character strings or combinations) as generated by the disambiguation software. A user may select one of the items listed in the variant component 72 for inclusion in the final text component 68.

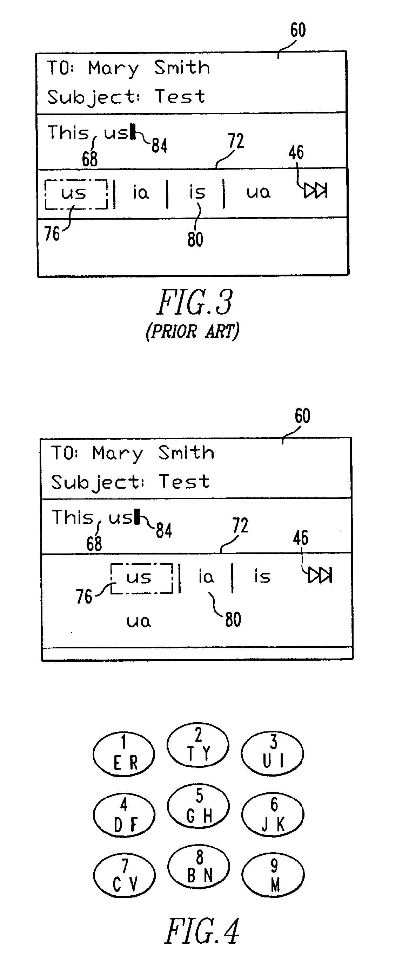

In many current software-based text disambiguation systems, the output component that includes the list of possible intended inputs that is generated by the disambiguation software, such as a variant component 72, is presented as a single line of text. In order to select a particular one of the possible intended inputs, a user must typically execute a number of affirmative actions, such as scrolling a thumbwheel or pressing a predetermined function button. For example, Figure 3 shows an example of a prior art output containing a prior art variant component 72 that may appear on a display such as a display 60 in a situation where the list of possible intended inputs (possible character strings or combinations) that is generated by the disambiguation software is provided on a single line. In order to select the character string "is" from the list of possible intended inputs, a user of handheld electronic device 4 will have to either (i) scroll the thumbwheel to a large enough extent to move the "highlighting" over the character string "is" and then press an enter key or the like, or (ii) press a function button such as the <NEXT> key 40 shown in Figure 1 a sufficient number of time to move the "highlighting" over the character string "is" and then press an enter key or the like, both of which require a number of different user operations and thus require user time and attention. In addition, when the number of possible intended inputs that is generated by the disambiguation software is so large that all of them cannot fit on a single line of the display, the list is typically continued on one or more additional screens (each screen having a single line of text containing possible intended input choices), and the user must take some action, such as scrolling a thumbwheel or pressing a predetermined function button such as the <NEXT> key 40, to move from one screen to the next to view all of the choices. Once on the desired screen, the steps described above must be taken to select a particular one of the listed possible intended inputs. Again, all of these actions are time consuming and inconvenient for the user. Thus, a method is needed for electronic devices that employ text disambiguation software that simplifies and shortens the procedure required to select a possible intended input generated by the disambiguation software.

US 6,204,848 relates to a data entry apparatus receives a first character key from a keypad. A set of characters associated with the first character key is displayed. A second character key from the keypad is received, wherein a second set of characters is associated with the second character key. A character from the first set of characters is combined with a character from the second set of characters. A set of alternative n-grams is displayed, derived from the step of combining, in descending order based on a probability of frequency of use in a given language. When an alternative n-gram is detected as being actively highlighted, the n-gram is locked to create a locked n-gram and characters associated with subsequent character keys vary in their combinations with respect to the locked n-gram.

EP 0397164 A1 relates to an alphanumeric text entry device comprising a display (5) and keyboard. The keyboard of this device comprises numerical keys (2) associated with groups of alphanumeric characters and selection keys (4) making it possible to select one of the characters of a group corresponding to a numerical key. It is characterised in that the display (5) is composed of two parts, a first part displaying the text already entered and a second part which shows in the immediate vicinity of a selection key (4) at least one of the alphanumeric characters of a numerical key (2). The invention can be used particularly in the incorporation of this device in a telephone terminal.

### SUMMARY OF THE INVENTION

The invention, in one aspect, relates to a method of entering information into an electronic device, the electronic device having a text disambiguation function, a plurality of keys provided on a keyboard and having at least one character displayed thereon and a display, the method including: generating a plurality of character combination choices using the text disambiguation function based on a depression of at least two of the plurality of character-entry keys when the electronic device is in a character entry mode; displaying the character combination choices in a first spatial arrangement on the display, the first spatial arrangement substantially corresponding to a second spatial arrangement of one or more of the character-entry keys, wherein each one of the character combination choices corresponds to a particular one of the one or more character-entry keys; determining whether a trigger signal has been received, the trigger signal indicating a switch from the character entry mode to a character combination choice selection mode, wherein in the combination choice selection mode a depression of any of the keys will not result in the entry of any of the at least one character disposed thereon; and, if it is determined that the trigger signal has been received, switching to the character combination choice selection mode and selecting and inputting a particular one of the character combination choices when the particular one of the one or more character-entry keys that corresponds to the particular one of the character combination choices is depressed.

In another aspect, the invention relates to an electronic device, including: a keyboard having a plurality of character-entry keys each having at least one character disposed thereon; a display; a processor; and, a memory storing one or more routines executable by the processor. The one or more routines implement a text disambiguation function and are adapted to: generate a plurality of character combination choices using the text disambiguation function based on a depression of at least two of the plurality of character-entry keys when the electronic device is in a character entry mode; display the character combination choices in a first spatial arrangement on the display, the first spatial arrangement substantially corresponding to a second spatial arrangement of one or more of the character-entry keys, wherein each one of the character combination choices corresponds to a particular one of the one or more keys provided on a portion of the keyboard; determine whether a trigger signal has been received, the trigger signal indicating a switch from the character entry mode to a character combination choice selection mode, wherein in the combination choice selection mode a depression of any of the keys will not result in the entry of any of the at least one character disposed thereon; and, if it is determined that that the trigger signal has been received, switch to the character combination choice selection mode and select and input into the processor a particular one of the character combination choices when the particular one of the one or more character-entry keys that corresponds to the particular one of the character combination choices is depressed.

### BRIEF DESCRIPTION OF THE DRAWINGS

A full understanding of the invention can be gained from the following Description of the Preferred Embodiments when read in conjunction with the accompanying drawings in which:
Figure 1 is a front view of an improved handheld electronic device in accordance with the invention;
Figure 2 is a block diagram of the handheld electronic device of Figure 1;
Figure 3 is an exemplary prior art screen provided on a display of a handheld electronic that displays character combination choices generated by a text disambiguation function; and
Figure 4 is an exemplary screen provided on a display of the handheld electronic shown in Figures 1 and 2 along with a schematic representation of a portion of a keypad of the handheld electronic shown in Figures 1 and 2 wherein the screen displays and enables the selection of character combination choices generated by a text disambiguation function according to the invention;

Similar numerals refer to similar parts throughout the specification.

### DESCRIPTION OF THE PREFERRED EMBODIMENTS

An improved handheld electronic device 4 is indicated generally in Figure 1 and is depicted schematically in Figure 2. The exemplary handheld electronic device 4 includes a housing 6 upon which are disposed a processor unit that includes an input apparatus 8, an output apparatus 12, a processor 16, and a memory 20. The processor 16 may be, for instance, and without limitation, a microprocessor (µP) and is responsive to inputs from the input apparatus 8 and provides output signals to the output apparatus 12. The processor 16 also interfaces with the memory 20. Examples of handheld electronic devices are included in U.S. Patent Nos. 6,452,588 and 6,489,950.

As can be understood from Figure 1, the input apparatus 8 includes a keypad 24 and a thumbwheel 32. The keypad 24 is in the exemplary form of a reduced QWERTY keyboard including a plurality of keys 28 that serve as input members. It is noted, however, that the keypad 24 may be of other reduced configurations, such as a reduced AZERTY keyboard, a reduced QWERTZ keyboard, or other keyboard arrangement, whether presently known or unknown. In this regard, the expression "reduced" and variations thereof, in the context of a keyboard, such as a keypad or other arrangement of input members, shall refer broadly to an arrangement in which at least one of the input members has assigned thereto a plurality of characters within a given set, such as a plurality of letters, for example, in the set of Roman letters, for example, thereby rendering ambiguous an intended result of an actuation of the at least one of the input members. In addition, as used herein, the expression "key" and variations thereof shall refer broadly to any of a variety of input members such as buttons, switches, and the like without limitation.

In this regard, and as will be set forth below in greater detail, the system architecture of the handheld electronic device 4 advantageously is organized to be operable independent of the specific layout of the keypad 24. Accordingly, the system architecture of the handheld electronic device 4 can be employed in conjunction with virtually any keyboard layout substantially without requiring any meaningful change in the system architecture.

The keys 28 are disposed on a front face of the housing 6, and the thumbwheel 32 is disposed at a side of the housing 6. The thumbwheel 32 can serve as another input member and is both rotatable, as is indicated by the arrow 34, to provide selection inputs to the processor 16, and also can be pressed in a direction generally toward the housing 6, as is indicated by the arrow 38, to provide another selection input to the processor 16.

Among the keys 28 of the keypad 24 are a <NEXT> key 40 and an <ENTER> key 44. The <NEXT> key 40 can be pressed to provide a selection input to the processor 16 and provides substantially the same selection input as is provided by a rotational input of the thumbwheel 32. Since the <NEXT> key 40 is provided adjacent a number of the other keys 28 of the keypad 24, the user can provide a selection input to the processor 16 substantially without moving the user's hands away from the keypad 24 during a text entry operation. As seen in Figure 1, the <NEXT> key 40 additionally and advantageously includes a graphic 42 disposed thereon, and in certain circumstances the output apparatus 12 also displays a displayed graphic 46 thereon to identify the <NEXT> key 40 as being able to provide a selection input to the processor 16. In this regard, the displayed graphic 46 of the output apparatus 12 is substantially similar to the graphic 42 on the <NEXT> key and thus identifies the <NEXT> key 40 as being capable of providing a desirable selection input to the processor 16.

As can further be seen in Figure 1, many of the keys 28 include a number of characters 48 disposed thereon. As employed herein, the expression "a number of" and variations thereof shall refer broadly to any quantity, including a quantity of one, and in certain circumstances herein can also refer to a quantity of zero. In the exemplary depiction of the keypad 24, many of the keys 28 include two or more characters, such as including a first character 52 and a second character 56 assigned thereto. It is understood that the expression "characters" shall broadly be construed to include letters, digits, symbols and the like and can additionally include ideographic characters, components thereof, other linguistic elements, and the like. The keys 28 having one or more characters 48 can be considered to be linguistic input members.

One of the keys 28 of the keypad 24 includes as the characters 48 thereof the letters "Q" and "W", and an adjacent key 28 includes as the characters 48 thereof the letters "E" and "R". It can be seen that the arrangement of the characters 48 on the keys 28 of the keypad 24 is generally of a QWERTY arrangement, albeit with many of the keys 28 including two of the characters 48.

The memory 20 is depicted schematically in Figure 2. The memory 20 can be any of a variety of types of internal and/or external storage media, alone or in combination, such as, without limitation, RAM, ROM, EPROM(s), EEPROM(s), and the like that provide a storage register for data storage such as in the fashion of an internal storage area of a computer, and can be volatile memory or nonvolatile memory. The memory 20 additionally includes a number of routines depicted generally with the numeral 22 for the processing of data. The routines 22, executable by the processor 16, can be in any of a variety of forms such as, without limitation, software, firmware, and the like. The routines 22 include a software-based text disambiguation function as described elsewhere herein as an application, as well as other routines. The software-based text disambiguation function may, in one embodiment, be as described in commonly owned United States Patent Application Serial No. 10/931,281, entitled "Handheld Electronic Device With Text Disambiguation," the disclosure of which is incorporated herein by reference. In addition, the routines 22 may also include a non-predictive keystroke interpretation system, such as a "multi-tap" system, that allows a user to substantially unambiguously specify a particular character 48 on a particular key 28 by pressing the same key 28 a number of times equivalent to the position of the desired character 48 on the key 28.

The output apparatus 12 includes a display 60 upon which can be provided an output 64. An exemplary output 64 is depicted on the display 60 in Fig. 1. The output 64 includes a text component 68 and a variant component 72. The variant component 72 includes a default portion 76 and a variant portion 80. The display also includes a cursor 84 that depicts generally where the next input from the input apparatus 8 will be received.

The text component 68 of the output 64 provides a depiction of the default portion 76 of the output 64 at a location on the display 60 where the text is being input. The variant component 72 is disposed generally in the vicinity of the text component 68 and provides, in addition to the default proposed output 76, a depiction of the various alternate character combination choices, i.e., alternates to the default proposed output 76, that are proposed by the text disambiguation function in response to an input sequence of key actuations of the keys 28.

As described in detail in commonly owned United States Patent Application Publication 2006/0058995entitled "Handheld Electronic Device With Text Disambiguation," the default portion 76 is proposed by the text disambiguation function as being the most likely disambiguated interpretation of the ambiguous input provided by the user. The variant portion 80 includes a predetermined quantity of alternate proposed interpretations of the same ambiguous input from which the user can select, if desired.

Referring to Figure 4, which is an exemplary output provided on display 60 along with a schematic representation of a portion of keypad 24, the variant component 72 is, according to the invention, provided in a manner that facilitates and simplifies the selection of one of the character combination choices included therein. In particular, the character combination choices included in variant component 72 are arranged in a way that substantially matches the spatial arrangement of the keys 28 of a particular, predetermined portion of keypad 24. In the preferred embodiment of the invention, the character combination choices included in variant component 72 are arranged in a way that substantially matches the spatial arrangement of the keys 28 that include the numerals 1 through 9 thereon. As a result, a user may select a particular one of the character combination choices included in variant component 72 by pressing the particular key 28 that lies in the position of the keypad 24 that corresponds to the position of the particular character combination choice within the displayed variant component 72. For example, referring to Figure 4, the variant component 72 is arranged such that the character combination "us" corresponds to the key 28 containing the number 1 thereon, the character combination "ia" corresponds to the key 28 containing the number 2 thereon, the character combination "is" corresponds to the key 28 containing the number 3 thereon, and the character combination "ua" corresponds to the key 28 containing the number 4 thereon, and each of those particular character combinations can be selected by simp0ly pressing the corresponding key 28 (e.g., 4 for "ua"). According to an aspect of the invention, handheld electronic device 4 includes a routine 22, stored in memory 20 and executable by processor 16, for displaying and enabling the selection of the character combination choices generated by the text disambiguation function of handheld electronic device 4 in the manner just described.

In addition, handheld electronic device 4 is preferably provided with some type of triggering mechanism that causes handheld electronic device 4 to switch from a character entry mode to a character combination choice selection mode such that handheld electronic device 4 will treat the next depression of a key 28 as a selection of a particular character combination choice as opposed to the entry of an additional character. For example, such a trigger or trigger signal may be the passage of a predetermined amount of time that the variant portion remains displayed without entry of another character, or may be the depression of one or more keys 28 (or a special, dedicated key) in a predetermined manner (such as for a predetermined duration), sequence or combination.

Thus, as will be appreciated, the method described herein greatly simplifies the process of selecting a particular character combination choice from variant portion 72 by requiring the depression of only a single key 28 to make selections.

While specific embodiments of the invention have been described in detail, it will be appreciated by those skilled in the art that various modifications and alternatives to those details could be developed in light of the overall teachings of the disclosure. For example, while the invention has been described in connection with the a handheld electronic device that employs a text disambiguation function, it will be appreciated that the invention may also be utilized in connection with other types of electronic devices that employ a text disambiguation function, such as a personal computer or the like. Accordingly, the particular arrangements disclosed are meant to be illustrative only and not limiting as to the scope of the invention which is to be given the full breadth of the claims appended and any and all equivalents thereof.

## Claims

1. A method of entering information into an electronic device, said electronic device having a text disambiguation function, a keyboard (24) having a plurality of character-entry keys (28) each having at least one character disposed thereon, and a display (60), the method comprising:
generating a plurality of character combination choices using said text disambiguation function based on a depression sequence of at least two of said plurality of character-entry keys (28) when said electronic device is in a character entry mode;
displaying said character combination choices in a first spatial arrangement on said display (60), said first spatial arrangement substantially corresponding to a second spatial arrangement of one or more of said character-entry keys (28), wherein each one of said character combination choices corresponds to a particular one of said one or more character-entry keys (28);
determining whether a trigger signal has been received, said trigger signal indicating a switch from said character entry mode to a character combination choice selection mode, wherein in said combination choice selection mode a depression of any of said keys will not result in the entry of any of the at least one character disposed thereon; and,
if it is determined that said trigger signal has been received, switching to said character combination choice selection mode and selecting and inputting a particular one of said character combination choices when said particular one of said one or more character-entry keys (28) that corresponds to said particular one of said character combination choices is depressed.

2. The method according to claim 1, wherein said electronic device is a handheld electronic device (4).

3. The method according to claim 1, wherein said plurality of character-entry keys (28) comprise nine keys, each of said nine keys having one of the numbers 1 through 9, respectively, provided thereon.

4. The method according to claim 3, wherein said second spatial arrangement comprises three rows, each of said rows having three of said keys (28).

5. The method according to claim 1, wherein a total number of said character combination choices is less than a total number of said character-entry keys (28) such that one or more of said character-entry keys (28) do not have a corresponding one of said character combination choices.

6. An electronic device, comprising:
a keyboard (24) having a plurality of character-entry keys (28) each having at least one character disposed thereon;
a display (60);
a processor (16); and
a memory (20) storing one or more routines (22) executable by said processor (16), said one or more routines (22) implementing a text disambiguation function and being adapted to:
generate a plurality of character combination choices using said text disambiguation function based on a depression sequence of at least two of said plurality of character-entry keys (28) when said electronic device is in a character entry mode;
display said character combination choices in a first spatial arrangement on said display (60), said first spatial arrangement substantially corresponding to a second spatial arrangement of one or more of said character-entry keys (28), wherein each one of said character combination choices corresponds to a particular one of said one or more keys (28) provided on a portion of said keyboard (24);
determine whether a trigger signal has been received, said trigger signal indicating a switch from said character entry mode to a character combination choice selection mode, wherein in said combination choice selection mode a depression of any of said keys will not result in the entry of any of the at least one character disposed thereon; and,
if it is determined that that said trigger signal has been received, switch to said character combination choice selection mode and select and input into said processor (16) a particular one of said character combination choices when said particular one of said one or more character-entry keys (28) that corresponds to said particular one of said character combination choices is depressed.

7. The electronic device according to claim 6, wherein said electronic device is a handheld electronic device (4).

8. The electronic device according to claim 6, wherein said plurality of keys (28) comprise nine keys, each of said nine keys having one of the numbers 1 through 9, respectively, provided thereon.

9. The electronic device according to claim 8, wherein said second spatial arrangement comprises three rows, each of said rows having three of said character-entry keys (28) provided on said portion of said keyboard (24).

10. The electronic device according to claim 6, wherein a total number of said character combination choices is less than a total number of said character-entry keys (28) such that one or more of said character-entry keys (28) do not have a corresponding one of said character combination choices.

## Patentansprüche

1. Verfahren zum Eingeben von Information in eine elektronische Vorrichtung, wobei die elektronische Vorrichtung eine Textdisambiguierungsfunktion, eine Tastatur (24) mit einer Vielzahl von Zeichen-Eingabe-Tasten (28), wobei jede zumindest ein Zeichen darauf angeordnet hat, und eine Anzeige (60) hat, wobei das Verfahren aufweist:
Erzeugen einer Vielzahl von Zeichenkombinationsoptionen unter Verwendung der Textdisambiguierungsfunktion basierend auf einer Drücken-Sequenz von zumindest zwei der Vielzahl von Zeichen-Eingabe-Tasten (28), wenn die elektronische Vorrichtung in einem Zeichen-Eingabe-Modus ist;
Anzeigen der Zeichenkombinationsoptionen in einer ersten räumlichen Anordnung auf der Anzeige (60), wobei die erste räumliche Anordnung im Wesentlichen einer zweiten räumlichen Anordnung von einer oder mehreren der Zeichen-Eingabe-Tasten (28) entspricht, wobei jede der Zeichenkombinationsoptionen einer bestimmten der einen oder mehreren der Zeichen-Eingabe-Tasten (28) entspricht;
Bestimmen, ob ein Auslösesignal empfangen wurde, wobei das Auslösesignal ein Umschalten von dem Zeichen-Eingabe-Modus zu einem Zeichenkombinationsoption-Auswahl-Modus anzeigt, wobei in dem Kombinationsoption-Auswahl-Modus ein Drücken einer der Tasten nicht zu der Eingabe eines des zumindest einen Zeichens führt, das darauf angeordnet ist; und,
wenn bestimmt wird, dass das Auslösesignal empfangen wurde, Umschalten zu dem Zeichenkombinationsoption-Auswahl-Modus und Auswählen und
Eingeben einer bestimmten der Zeichenkombinationsoptionen, wenn die bestimmte der einen oder mehreren Zeichen-Eingabe-Tasten (28) gedrückt wird, die der bestimmten der Zeichenkombinationsoptionen entspricht.

2. Verfahren gemäß Anspruch 1, wobei die elektronische Vorrichtung eine tragbare elektronische Vorrichtung (4) ist.

3. Verfahren gemäß Anspruch 1, wobei die Vielzahl von Zeichen-Eingabe-Tasten (28) neun Tasten aufweist, wobei jede der neun Tasten eine der Zahlen 1 bis 9 jeweils darauf vorgesehen hat.

4. Verfahren gemäß Anspruch 3, wobei die zweite räumliche Anordnung drei Reihen aufweist, wobei jede der Reihen drei der Tasten (28) hat.

5. Verfahren gemäß Anspruch 1, wobei eine gesamte Anzahl der Zeichenkombinationsoptionen geringer ist als eine gesamte Anzahl der Zeichen-Eingabe-Tasten (28) derart, dass eine oder mehrere der Zeichen-Eingabe-Tasten (28) keine entsprechende der Zeichenkombinationsoptionen hat.

6. Elektronische Vorrichtung, die aufweist:
eine Tastatur (24) mit einer Vielzahl von Zeichen-Eingabe-Tasten (28), die jeweils zumindest ein Zeichen darauf angeordnet haben;
eine Anzeige (60);
einen Prozessor (16); und
einen Speicher (20) zum Speichern einer oder mehrerer Routinen (22), die durch den Prozessor (16) ausführbar ist/sind, wobei die eine oder die mehreren Routinen (22) eine Textdisambiguierungsfunktion implementieren und ausgebildet sind:
eine Vielzahl von Zeichenkombinationsoptionen zu erzeugen unter Verwendung der Textdisambiguierungsfunktion basierend auf einer Drücken-Sequenz von zumindest zwei der Vielzahl von Zeichen-Eingabe-Tasten (28), wenn die elektronische Vorrichtung in einem Zeichen-Eingabe-Modus ist;
die Zeichenkombinationsoptionen in einer ersten räumlichen Anordnung auf der Anzeige (60) anzuzeigen, wobei die erste räumliche Anordnung im Wesentlichen einer zweiten räumlichen Anordnung von einer oder mehreren der Zeichen-Eingabe-Tasten (28) entspricht, wobei jede der Zeichenkombinationsoptionen einer bestimmten der einen oder mehreren Tasten (28) entspricht, die auf einem Teil der Tastatur (24) vorgesehen sind;
zu bestimmen, ob ein Auslösesignal empfangen wurde, wobei das Auslösesignal ein Umschalten von dem Zeichen-Eingabe-Modus zu einem Zeichenkombinationsoption-Auswahl-Modus anzeigt, wobei in dem Kombinationsoption-Auswahl-Modus ein Drücken einer der Tasten nicht zu
der Eingabe eines des zumindest einen Zeichens führt, das darauf angeordnet ist; und,
wenn bestimmt wird, dass das Auslösesignal empfangen wurde, zu dem Zeichenkombinationsoption-Auswahl-Modus umzuschalten und eine bestimmte der Zeichenkombinationsoptionen auszuwählen und in den Prozessor (16) einzugeben, wenn die bestimmte der einen oder mehreren Zeichen-Eingabe-Tasten (28) gedrückt wird, die der bestimmten der Zeichenkombinationsoptionen entspricht.

7. Elektronische Vorrichtung gemäß Anspruch 6, wobei die elektronische Vorrichtung eine tragbare elektronische Vorrichtung (4) ist.

8. Elektronische Vorrichtung gemäß Anspruch 6, wobei die Vielzahl von Tasten (28) neun Tasten aufweist, wobei jede der neun Tasten eine der Zahlen 1 bis 9 jeweils darauf vorgesehen hat.

9. Elektronische Vorrichtung gemäß Anspruch 8, wobei die zweite räumliche Anordnung drei Reihen aufweist, wobei jede der Reihen drei der Zeichen-Eingabe-Tasten (28) hat, die auf dem Teil der Tastatur (24) vorgesehen sind.

10. Elektronische Vorrichtung gemäß Anspruch 6, wobei eine gesamte Anzahl der Zeichenkombinationsoptionen geringer ist als eine gesamte Anzahl der Zeichen-Eingabe-Tasten (28) derart, dass eine oder mehrere der Zeichen-Eingabe-Tasten (28) keine entsprechende der Zeichenkombinationsoptionen hat.

## Revendications

1. Procédé de saisie d'informations dans un dispositif électronique, ledit dispositif électronique ayant une fonction de désambiguïsation du texte, un clavier (24) ayant une pluralité de touches d'entrée de caractères (28) dont chacune a au moins un caractère disposé sur elle, et un afficheur (60), le procédé consistant :
à générer une pluralité de choix de combinaisons de caractères en utilisant ladite fonction de désambiguïsation du texte sur la base d'une séquence d'appuis sur au moins deux de ladite pluralité de touches d'entrée de caractères (28) lorsque ledit dispositif électronique est dans un mode d'entrée de caractères ;
à afficher lesdits choix de combinaisons de caractères dans un premier agencement spatial sur ledit afficheur (60), ledit premier agencement spatial correspondant sensiblement à un deuxième agencement spatial d'une ou plusieurs desdites touches d'entrée de caractères (28), dans lequel chacun desdits choix de combinaisons de caractères correspond à l'une, particulière, desdites une ou plusieurs touches d'entrée de caractères (28) ;
à déterminer si un signal de déclenchement a été reçu, ledit signal de déclenchement indiquant un passage dudit mode d'entrée de caractères à un mode de sélection de choix de combinaisons de caractères, dans lequel, dans ledit mode de sélection de choix de combinaisons, l'appui sur l'une quelconque desdites touches ne conduit pas à l'entrée de l'au moins un caractère disposé sur elles ; et
s'il est déterminé que ledit signal de déclenchement a été reçu, à passer audit mode de sélection de choix de combinaisons de caractères et à sélectionner et fournir en entrée l'un particulier desdits choix de combinaisons de caractères lorsqu'on appuie sur ladite une particulière desdites une ou plusieurs touches d'entrée de caractères (28) qui correspond audit choix particulier parmi lesdits choix de combinaisons de caractères.

2. Procédé selon la revendication 1, dans lequel ledit dispositif électronique est un dispositif électronique portatif (4).

3. Procédé selon la revendication 1, dans lequel ladite pluralité de touches d'entrée de caractères (28) comprend neuf touches, chacune desdites neuf touches ayant respectivement l'un des numéros 1 à 9 disposé sur celle-ci.

4. Procédé selon la revendication 3, dans lequel ledit deuxième agencement spatial comprend trois rangées, chacune desdites rangées ayant trois desdites touches (28).

5. Procédé selon la revendication 1, dans lequel le nombre total desdits choix de combinaisons de caractères est inférieur à un nombre total desdites touches d'entrée de caractères (28) de façon qu'une ou plusieurs desdites touches d'entrée de caractères (28) n'aient pas l'un, correspondant, desdits choix de combinaisons de caractères.

6. Dispositif électronique, comprenant :
un clavier (24) ayant une pluralité de touches d'entrée de caractères (28) dont chacune a au moins un caractère disposé sur elle;
un afficheur (60) ;
un processeur (16) ; et
une mémoire (20) stockant un ou plusieurs sous-programmes (22) pouvant être exécutés par ledit processeur (16), lesdits un ou plusieurs sous-programmes (22) mettant en oeuvre une fonction de désambiguïsation du texte et étant aptes :
à générer une pluralité de choix de combinaisons de caractères en utilisant ladite fonction de désambiguïsation du texte sur la base d'une séquence d'appuis sur au moins deux de ladite pluralité de touches d'entrée de caractères (28) lorsque ledit dispositif électronique est dans un mode d'entrée de caractères ;
à afficher lesdits choix de combinaisons de caractères dans un premier agencement spatial sur ledit afficheur (60), ledit premier agencement spatial correspondant sensiblement à un deuxième agencement spatial d'une ou plusieurs desdites touches d'entrée de caractères (28), dans lequel chacun desdits choix de combinaisons de caractères correspond à l'une, particulière, desdites une ou plusieurs touches (28) prévues sur une partie dudit clavier (24) ;
à déterminer si un signal de déclenchement a été reçu, ledit signal de déclenchement indiquant un passage dudit mode d'entrée de caractères à un mode de sélection de choix de combinaisons de caractères, dans lequel, dans ledit mode de sélection de choix de combinaisons, le fait d'appuyer sur l'une quelconque desdites touches ne conduit pas à l'entrée de l'un quelconque de l'au moins un caractère disposé sur elles ; et
s'il est déterminé que ledit signal de déclenchement a été reçu, à passer audit mode de sélection de choix de combinaisons de caractères et à sélectionner et fournir en entrée audit processeur (16) l'un, particulier, desdits choix de combinaisons de caractères lorsqu'on appuie sur ladite une particulière desdites une ou plusieurs touches d'entrée de caractères (28) qui correspond audit un particulier desdits choix de combinaisons de caractères.

7. Dispositif électronique selon la revendication 6, dans lequel ledit dispositif électronique est un dispositif électronique portatif (4).

8. Dispositif électronique selon la revendication 6, dans lequel ladite pluralité de touches (28) comprend neuf touches, chacune desdites neuf touches ayant respectivement l'un des numéros 1 à 9 disposé sur elle.

9. Dispositif électronique selon la revendication 8, dans lequel ledit deuxième agencement spatial comprend trois rangées, chacune desdites rangées ayant trois desdites touches d'entrée de caractères disposées sur ladite partie dudit clavier (24).

10. Dispositif électronique selon la revendication 6, dans lequel le nombre total desdits choix de combinaisons de caractères est inférieur à un nombre total desdites touches d'entrée de caractères (28) de telle façon qu'une ou plusieurs desdites touches d'entrée de caractères (28) n'aient pas l'un, correspondant, desdits choix de combinaisons de caractères.
